# EUROPEAN PATENT APPLICATION

(11) **EP 1 369 600 A2**
(43) Date of publication of application: **10.12.2003**
(21) Application number: 03012484.6
(22) Date of filing: 02.06.2003
(51) Int. Cl.: F16B 19/10

(54) **Peel-type blind rivet**

(30) Priority: 06.06.2002 GB 0213059
(71) Applicant: Newfrey LLC, Newark, Delaware 19711 (US)
(72) Inventor: Millington, Maurice Edwin, Burntwood, Staffordshire W67 8TR (GB)
(74) Representative: Haar, Lucas H., Dipl.-Ing.

(57) **Abstract**

There is provided a peel type blind rivet (22) for securement in an aperture of a workpiece, the rivet comprising a tubular shell (24) having a flange (26) at one thereof, this shell housing a mandrel stem (28) with a mandrel head (30) disposed at one end of the mandrel stem so as to abut a remote end of the tubular shell, the mandrel head (30) having a plurality of edges extending radially outwards therefrom which, in operation when the mandrel is subjected to a tensile load engage with the remote end of the shell so as to split the shell into a plurality of segments to engage the blind side of the workpiece, whereby the stem of the mandrel further comprises at least one protrusion (38) about which the shell of the rivet body deforms during setting to retain the mandrel head (30) within the set rivet.

## Description

This invention relates to a blind rivet, and more especially to a peel type blind rivet.

Blind rivets are set in an aperture in one or more application pieces from one side of the application piece. A blind rivet typically comprises an outer tubular shell flanged at one end, and a mandrel, having a stem and a radially enlarged head at one end of the shell. The periphery of the radially enlarged head of the mandrel is the same size or slightly smaller than the periphery of the rivet shell, so that both parts can be inserted together into the application piece(s) from the front side. The rivet shell is positioned in the aperture of the application piece(s) with the flanged end on the operator side, and the mandrel stem extends into the tubular shell so that its enlarged head is on the blind side of the application piece(s). During the rivet setting process, the flange of the rivet shell is supported by a setting tool, and the stem of the mandrel is subjected to tensile loading by the tool, and thereby pulled through the shell of the rivet until the enlarged head of the mandrel contacts the remote end face of the tubular shell of the rivet. Further tensile loading of the mandrel stem then causes the remote end of the shell to collapse in some way into contact with the blind side of the application piece(s). The manner of collapse of the remote end of the shell depends on the type of rivet. The application piece(s) are thereby firmly gripped between the collapsed remote end of the rivet shell and the front flange of the rivet shell.

In a known peel type blind rivet, the enlarged mandrel head is typically provided with a number of edges, typically four edges, beneath the mandrel head. The effect of this is that during the setting process the remote end of the rivet shell is split into segments or petals (the number of segments or petals corresponding to the number of edges beneath the mandrel head). The segments or petals spread out on the blind side of the application piece(s) to make a broad bearing area onto the back face of the application piece(s). Therefore in peel type rivets the manner of collapse of the remote end of the shell is by splitting into segments or petals, which peel back into contact with the blind side of the application piece(s).

In known peel type blind rivets, on completion of the setting process the tensile loading is at its highest causing the mandrel stem to break (it is usually necked to enhance this break). This results in a release of strain energy. The release of energy causes the mandrel head part, which was temporarily lodged in the end of the peeled back shell, to be dislodged from its position, and to move in the opposite direction to that which it was previously pulled. Therefore the mandrel head and the remaining part of the mandrel shank are ejected from the rivet shell.

There are instances where the ejection of the mandrel head from the peel type blind rivet is undesirable. For example ejection would be undesirable where the rivet is being installed in the proximity of moving parts, or where electrical equipment is installed.

It is known from GB-A-2351538, in another type of blind rivet (a self plugging blind rivet), to provide a means to retain the mandrel head in the set blind rivet. According to this reference the stem of the mandrel is provided with a plurality of axial recesses, and each recess has a protrusion or bar member formed on it. When the rivet is set the shell deforms in a region adjacent the recess and surrounds each protrusion or bar member.

The present invention aims to provide a peel type blind rivet with means substantially to prevent the ejection of the mandrel head portion from the set shell, and means for retaining the mandrel head in the rivet shell body.

The present invention provides a peel type blind rivet for securement in an aperture in one or more application pieces, the rivet comprising:
a tubular shell having a flanged front face and a remote end;
a mandrel having an enlarged head end having a plurality of edges beneath the head, and a stem extending from the enlarged head, the stem being arranged to pass through the tubular shell so that the enlarged head of the mandrel is on the blind side of the application piece(s),
the stem comprising one or more protrusions from a surface thereof;
wherein during the setting process of the rivet the stem of the mandrel is subjected to tensile load whereby the edges beneath the enlarged head of the mandrel cause the remote end of the shell to split into a plurality of segments that engage the blind side of the application piece(s), and the shell of the rivet body deforms around the protrusion(s).

The deformation of the rivet body shell around the protrusion means that the mandrel head is retained in the shell.

Preferably a plurality of protrusions spaced around the periphery of the mandrel are provided. These may be at the same longitudinal location along the mandrel stem or spaced longitudinally along the stem. Preferably one or more pairs of diametrically opposed protrusions are provided.

Preferably the mandrel stem comprises a pre-necked portion, whereby during the setting process of the rivet the stem of the mandrel is subjected to tensile load and the stem breaks at the said pre-necked portion. In this case there is an ensuing release of strain energy at the instant of mandrel break time, and it is an advantage of the invention that the mandrel head can be retained by the protrusions in the shell against the opposing force generally operating to urge it against the direction it was previously pulled prior to mandrel break.

Preferably the portion of the mandrel stem between its enlarged head portion and its pre-necked portion defines a head-shaft portion, and the protrusion(s) are located on a surface of the head-shaft portion. Such a head-shaft portion is typically 3-5 mm long, preferably about 4 mm long. Such a head-shaft portion may be any shape in cross-section. In one preferred embodiment the head shaft portion is circular in cross-section. The remainder of the stem may be any shape in cross-section, but is preferably circular in cross-section. Where both the head-shaft portion and the remainder of the mandrel stem is circular in cross-section the head-shaft portion is preferably the same diameter as the remainder of the mandrel stem, but could be smaller, or even larger. In another preferred embodiment the head-shaft portion is rectilinear, preferably square, in cross-section. Advantages of a rectilinear, especially square cross-sectioned head shaft portion is lower cost tooling to manufacture the mandrel, and the fact that the edges of the rectilinear cross-sectioned head-shaft portion help to keep and guide the mandrel head in a central position in the rivet during setting Where a square cross-sectioned head-shaft portion is used in combination with a remaining stem portion that is cylindrical, the longitudinal edges of the head-shaft portion are preferably in line with the sides of the cylindrical remaining stem portion.

The protrusion on the stem of the mandrel may be any shape, as would be apparent to the man skilled in the art, to retain the mandrel head in the rivet body. In one embodiment the protrusion(s) comprises a bulge on a surface of the stem of the mandrel. Bulged protrusions are particularly appropriated for use with circular cross-sectioned mandrel stems, but can be used on any shaped mandrel stem. In another embodiment the protrusion(s) comprise a bar member extending across a surface of the mandrel head shaft or, stem, preferably in a direction perpendicular to the axis of the rivet. Bar-shaped protrusions are particularly appropriate for use with rectilinear-, especially square-cross-sectioned mandrel stems, but can be used on any shaped mandrel stem. Combinations of different shaped protrusions may also be used.

Preferably two protrusions are provided, located in opposed positions around the mandrel stem periphery, for example in diametrically opposed positions.

In another embodiment four protrusions are provided; a first pair of protrusions being located in opposed positions around the mandrel stem periphery in a first plane, and a second pair of protrusions being located in opposed positions around the mandrel stem periphery in a second plane, the second plane being 90° from the first plane. In this embodiment the second pair of protrusions is preferably longitudinally spaced from the first pair of protrusions along the stem of the mandrel.

Indentations may also be provided around the periphery of the rivet mandrel stem, preferably between the protrusions. These preferably accept deformed shell material during the setting process.

Embodiments of the invention will now be described, by way of example, with reference to the accompanying drawings, wherein:
Figure 1A is a longitudinal section through a peel type blind rivet according to the prior art, prior to setting;
Figure 1B is a longitudinal section through the rivet of Figure 1A, after setting;
Figure 2A is a longitudinal section through a first embodiment of peel type blind rivet according to the invention, prior to setting;
Figure 2B is a longitudinal section through the rivet of Figure 2A, after setting;
Figure 2C is a cross-sectional view along line A-A of Figure 2B;
Figure 3A is a longitudinal section through a second embodiment of peel type blind rivet according to the invention, prior to setting;
Figure 3B is a longitudinal section through the rivet of Figure 3A, after setting;
Figure 3C is a cross-sectional view along line A-A of Figure 3B;
Figure 3D is a cross-sectional view along line B-B of Figure 3B;
Figure 4A is a longitudinal section through a third embodiment of peel type blind rivet according to the invention, prior to setting;
Figure 4B is a longitudinal section through the rivet of Figure 4A, after setting;
Figure 4C is a cross-sectional view along line A-A of Figure 4B;
Figure 5A is a longitudinal section through a fourth embodiment of peel type blind rivet according to the invention, prior to setting;
Figure 5B is a longitudinal section through the rivet of Figure 5A, after setting;
Figure 5C is a cross-sectional view along line A-A of Figure 5B; and
Figure 5D is a cross-sectional view along line B-B of Figure 5B.

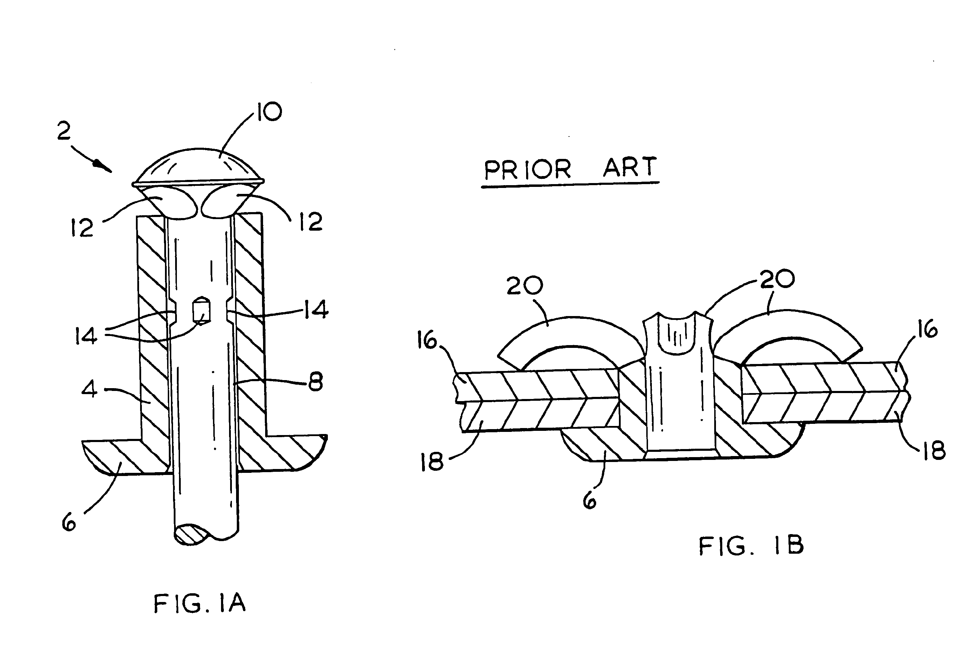

Referring to Figures 1A and 1B, these show a peel type rivet according to the prior art, before and after setting respectively. From Figure 1A, it can be seen that the known rivet 2 comprises an outer cylindrical shell 4 having a flanged head 6. The flanged head 6 is on the front operator side of the application pieces when the rivet is set. The rivet 2 also comprises a mandrel having a solid cylindrical stem 8 terminating at its remote end with an enlarged head 10. The underside of the enlarged head 10 of the mandrel has four cut edges 12 (two are visible in Figure 1). The stem 8 of the mandrel is pre-necked by the inclusion of four indented portions 14 around the circumference of the stem at a predetermined distance along the length of the stem 8.

Figure 1B shows the rivet 2 of Figure 1 after setting. The rivet 2 comprising the shell and mandrel is placed from the front into aligned apertures in two application pieces 16 and 18, and then during the setting process a tensile load is applied to the mandrel stem 8 pulling it towards the front of the application pieces (i.e. downwards in the Figures). During this process the edges 12 beneath the mandrel head 10 cause the remote end of the shell 4 to split into four segments or petals 20, which spread out against the blind side of the application pieces 16, 18, whereby the pieces 16 and 18 are held together between the spread petals 20 and the shell flange 6. On completion of the setting process, when the tensile loading is at its maximum, the mandrel stem 8 breaks at the pre-necked portion 14, and the ensuing release of energy causes the mandrel head 10 to be ejected from the rivet body.

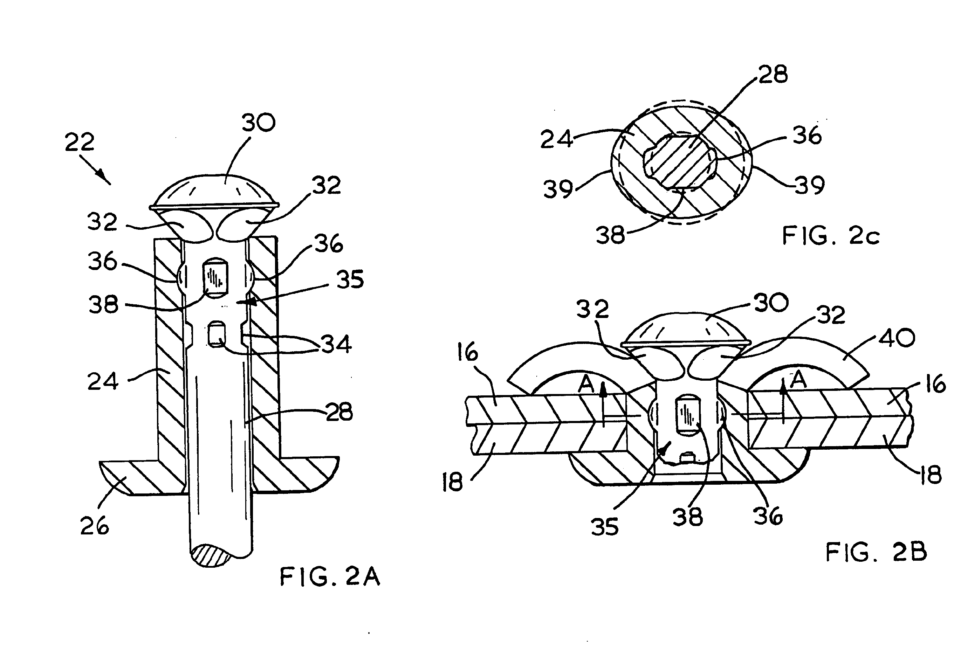

Figures 2 to 5 show peel type blind rivets according to the invention.

In Figure 2A a blind rivet 22 according to a first embodiment is shown prior to setting. It comprises a tubular shell 24 having a flanged end 26. A mandrel having a stem 28, with a pre-necked portion 34, and an enlarged head 30 the underside of which presents four cut edges 32, is provided. The length of the mandrel stem between the enlarged head 30 and the pre-necked portion 34 defines a head-shaft portion 35, which is about 4 mm long. The head shaft portion 35 is generally cylindrical, i.e. circular in cross-section and includes two protrusions in the form of diametrically opposed bulges 36 on the cylindrical surface of the head-shaft portion, and two diametrically opposed recesses 38 in the form of flat planes cut into the outer surface of the cylindrical head-shaft portion 35. The two bulges 36 and the two recesses 38 are at the same longitudinal point along the head-shaft portion 35 circumferentially spaced between each other. The cylindrical head-shaft portion has the same diameter as the rest of the mandrel stem 28.

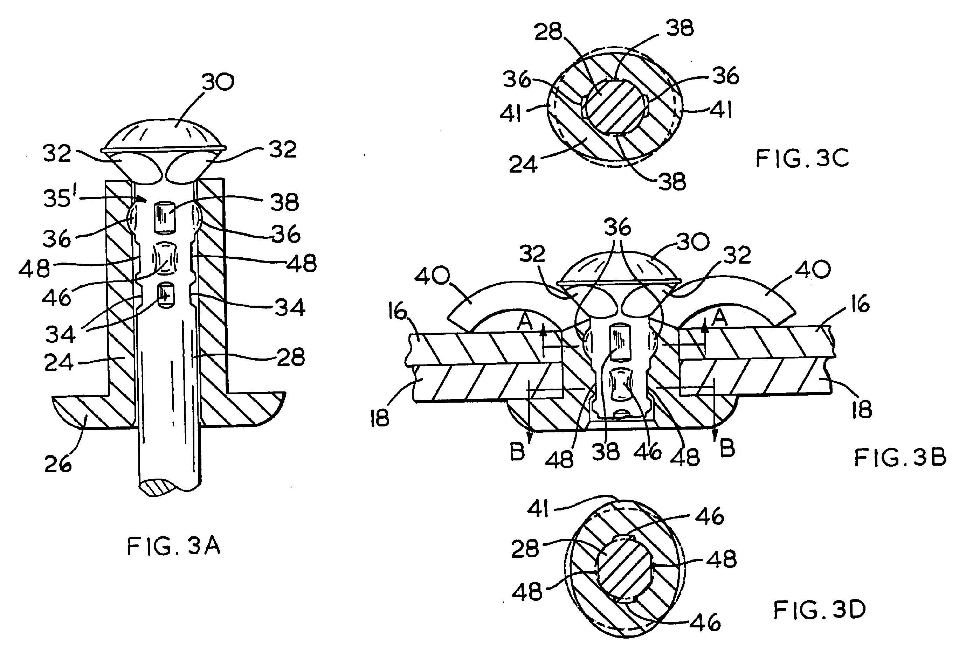

Figures 2B and 2C show the blind rivet of Figure 2A after setting. As in the prior art rivet of Figure 1, the edges 32 of the head 30 of the mandrel cause the remote end of the shell 24 to split into four petals 40 to spread along the blind side of the application pieces 16, 18. In this case, however, the applied tensile force has also caused the material of the shell 24 to be deformed around each of the bulges 36 and into each of the indented recesses 38. This deformation of the material of the shell 24 can be seen by comparing the forward sloping hashed section of Figure 2C with the dotted outline. In Figure 2C, and also in Figures 3C, 3D, 4C, 5C, and 5D the forward sloping hashed section show the shell position after setting, and the dotted outline shows the shell position prior to setting.

In contrast to the prior art, in this case, on completion of the setting process, when the tensile loading is at its maximum, the mandrel stem 28 breaks at the pre-necked portion 34 as before, but the ensuing release of energy is not able to eject the mandrel head 30 from the rivet body 24 since the head shaft portion connected to the mandrel head 30 is held firmly in place by the deformed shell material that has moved around the bulges 36 and into the indentations 38 of the mandrel stem 28. Also the radially outward deformation at points 39 urges the shell 24 into close conformity with at least part of the inner surface of the apertures in application pieces 16, 18.

Figures 3A to 3D show a second embodiment of rivet according to the invention. Like parts are given like reference numerals compared to the first embodiment of Figure 2. In common with the Figure 2 embodiment, the head-shaft portion 35' of the mandrel stem 28 is generally cylindrical, i.e. circular in cross-section, and has the same diameter as the rest of the mandrel stem 28. However, in addition to the bulges 36 and indentations 38 present in the first embodiment of rivet according to Figure 2, the head shaft portion 35' of the Figure 3 embodiment also comprises a second pair of diametrically opposed bulges 46 and diametrically opposed indentations 48. The second pair of bulges and indentations 46, 48 are longitudinally spaced from the first pair of bulges and indentations 36, 38. Also the bulges 36 are in the same plane as the indentations 48 and the indentations 38 are in the same plane as the bulges 46. Looking in particular at the cross-sectional views of Figures 3C and 3D it can be seen that material from the shell 24 is therefore urged outwards, and hence into conformity with the apertures in the application pieces 16,18, at four points 41 around the circumference of the head shaft portion 35', and that shell material is urged around four bulges and into four indents. Securement of the mandrel head portion 30 and head shaft portion 35' in the shell, and the rivet in the application pieces 16, 18, is therefore enhanced compared to the embodiment of Figure 2.

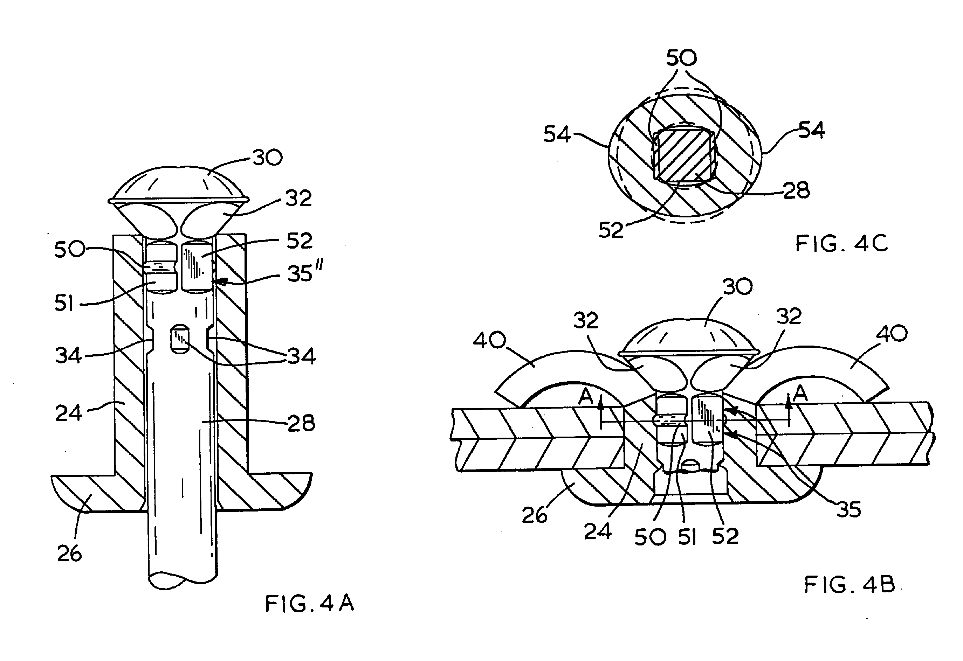

Figures 4A-C show a third embodiment of blind rivet according to the invention. As before like reference numerals refer to like parts compared to the earlier embodiments. In this case the head-shank portion 35" of the mandrel is square in cross-section. It comprises two protrusions in the form of diametrically opposed bars 50 extending across opposed faces 51 of the square cross-sectioned head shank 35". The bars 50 extend across the faces 51, in a direction perpendicular to the axis of the mandrel. The two intervening faces of the square cross-sectioned head shank portion 35" are referenced 52 in Figures 4A-C. During the setting process shell material is deformed around the bars 50 and into the recesses presented by the faces 51 around the bars 50 and into the recesses presented by faces 52. This material deformation thereby prevents ejection of the mandrel head 30 during the setting process. The material also deforms outwards at points 54 (see Figure 46). The deformation at points 54 causes the rivet shell 24 to be urged into contact with the inner surface of the apertures in the application pieces 16, 18.

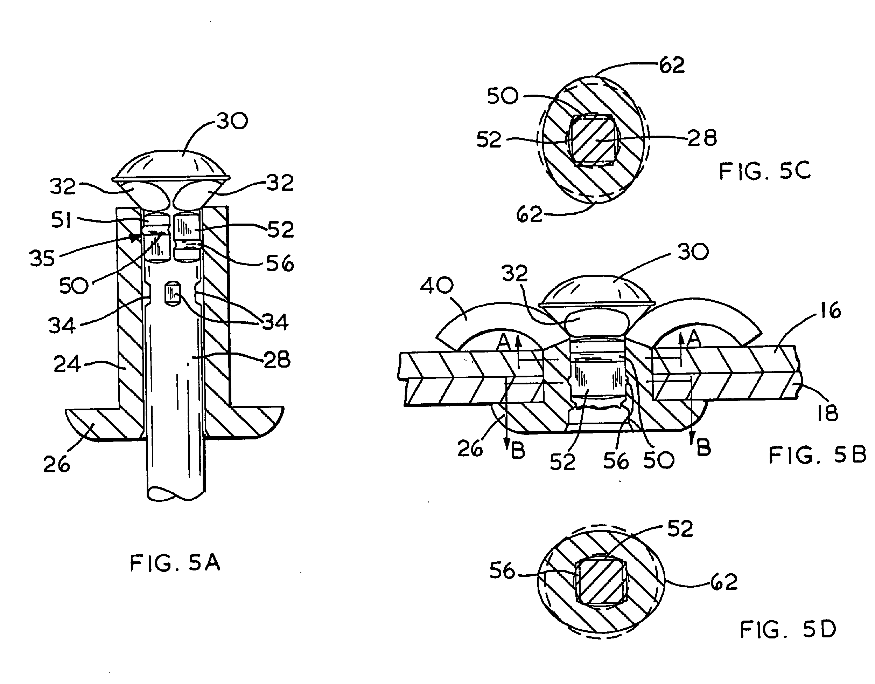

Figures 5A-D show a fourth embodiment of blind rivet according to the invention. As before like reference numerals refer to like parts compared to the earlier embodiments. As in the embodiment of Figure 4, the head-shank portion 35"' of the mandrel is square in cross-section. However in this case it comprises not only the two diametrically opposed bars 50 extending across opposed flat faces 51 of the square cross-sectioned head shank 35"', but also a second pair of diametrically opposed bars 56 extending across the other diametrically opposed flat faces 52 of the square cross-sectioned head shank 35"' in a direction perpendicular to the rivet axis. Each pair of bars 50, 56 is longitudinally spaced from the other pair of bars 54, 56. Looking in particular at the cross-sectional views of Figures 5C and 5D. it can be seen that material from the shell 24 is therefore urged outwards, and hence into conformity with the apertures in the application pieces 16,18, at four points 62 around the circumference of the head shaft portion 35"', and that shell material is urged around four bars 50, 56, and against the flat faces 51 and 52 around and between the bars 50 and 56. Therefore securement of the mandrel head portion 30 and head shaft portion 35 in the shell 24, and securement of the rivet shell 24 in the application pieces 16, 18 is enhanced compared to the embodiment of Figure 4.

## Claims

1. A peel type blind rivet for securement in an aperture in one or more application pieces, the rivet comprising:
a tubular shell having a flanged front face and a remote end;
a mandrel having an enlarged head end having a plurality of edges beneath the head, and a stem extending from the enlarged head, the stem being arranged to pass through the tubular shell so that the enlarged head of the mandrel is on the blind side of the application piece(s),
the stem comprising one or more protrusions from a surface thereof;
wherein during the setting process of the rivet the stem of the mandrel is subjected to tensile load whereby the edges beneath the enlarged head of the mandrel cause the remote end of the shell to split into a plurality of segments that engage the blind side of the application piece(s), and the shell of the rivet body deforms around the protrusion(s).

2. A rivet according to claim 1, wherein the mandrel stem comprises a pre-necked portion, whereby during the setting process of the rivet the stem of the mandrel is subjected to tensile load and the stem breaks at the said pre-necked portion.

3. A rivet according to claim 2, wherein the portion of the mandrel stem between its enlarged head portion and its pre-necked portion defines a head-shaft portion, and wherein the protrusion(s) are located on a surface of the head-shaft portion.

4. A rivet according to claim 3, wherein the head-shaft portion is 3-5mm long, preferably about 4mm long.

5. A rivet according to claim 3 or 4, wherein the head-shaft portion is circular in cross-section.

6. A rivet according to claim 3 or 4, wherein the head-shaft portion is rectilinear, preferably square, in cross-section.

7. A rivet according to any preceding claim wherein the protrusion(s) comprises a bulge on a surface of the stem of the mandrel.

8. A rivet according to any of claims 1 to 6, wherein the protrusion(s) comprise a bar member extending across a surface of the stem of the mandrel.

9. A rivet according to any preceding claim, comprising two protrusions located in opposed positions around the mandrel stem periphery.

10. A rivet according to any preceding claim, comprising four protrusions; a first pair of protrusions being located in opposed positions around the mandrel stem periphery in a first plane, and a second pair of protrusions being located in opposed positions around the mandrel stem periphery in a second plane, the second plane being 90° from the first plane.

11. A rivet according to claim 10, wherein the second pair of protrusions are longitudinally spaced from the first pair of protrusions along the stem of the mandrel.

12. A rivet substantially as hereinbefore defined with reference to the accompanying drawings.
